# EUROPÄISCHE PATENTSCHRIFT

(11) **EP 3 517 481 B1**
(45) Veröffentlichungstag und Bekanntmachung des Hinweises auf die Patenterteilung: **09.11.2022**
(21) Anmeldenummer: 19151235.9
(22) Anmeldetag: 10.01.2019
(51) Int. Cl.: B66F 9/075, H01R 13/516

(54) **FLURFÖRDERZEUG MIT EINEM ELEKTRISCHEN STECKVERBINDER**
INDUSTRIAL TRUCK WITH AN ELECTRICAL CONNECTOR
CHARIOT DE MANUTENTION DOTÉ D'UN CONNECTEUR ENFICHABLE ÉLECTRIQUE

(30) Priorität: 24.01.2018 DE 102018101529
(43) Veröffentlichungstag der Anmeldung: 31.07.2019
(73) Patentinhaber: Jungheinrich Aktiengesellschaft, 22047 Hamburg (DE)
(72) Erfinder: Rosenberg, Tilman, 22303 Hamburg (DE)
(74) Vertreter: Hauck Patentanwaltspartnerschaft mbB

(56) Entgegenhaltungen:
- DE-A1-102014 113 461
- JP-A- 2002 316 794
- JP-A- 2003 073 099
- US-A1- 2016 344 070
- US-B2- 9 586 605

## Beschreibung

Die vorliegende Erfindung betrifft ein Flurförderzeug mit einem Antriebsteil und einem Lastteil sowie einer Batterie, die in einem Batteriefach des Antriebsteils angeordnet und über Kabel mit einem elektrischen Steckverbinder zur Spannungsversorgung der Batterie elektrisch leitend verbindbar ist.

Bei elektrisch betriebenen Flurförderzeugen ist vorgesehen, dass für Ladevorgänge die Batterie an Bord verbleibt und von extern über eine Spannungsversorgung geladen wird. Grundsätzlich ist auch ein Entladevorgang der Batterie auf diese Weise möglich. Bei der Spannungsversorgung der Batterie handelt es sich entweder um eine von einem externen Ladegerät bereitgestellte Spannung oder um eine Spannungsversorgung, mit der ein an Bord befindliches Ladegerät versorgt wird, um so die an Bord befindliche Batterie mit dem Ladestrom zu laden. Bei einem Ladevorgang erfolgt die Spannungsversorgung und Stromübertragung für die Batterie über elektrische Steckverbinder. Ein elektrischer Steckverbinder ist dabei fahrzeugfest bereitgestellt, um mit einem externen elektrischen Steckverbinder elektrisch leitend verbunden zu werden. Elektrische Steckverbinder in dem Fahrzeug und der externe Steckverbinder sind aufeinander abgestimmt und stellen beim Zusammenstecken eine elektrisch leitende Verbindung her.

Flurförderzeuge werden in einem für Mensch und Maschine herausfordernden Arbeitsumfeld eingesetzt. Das Herstellen einer elektrisch leitenden Verbindung zwischen den Steckverbindern sollte daher nicht mit einer zu großen Kraftanstrengung oder ungewohnten Bewegungen verbunden sein. Auch aus ergonomischen Gründen ist es daher besonders wichtig, einen gut zu bedienenden elektrischen Steckverbinder am Flurförderzeug für einen Anschluss an einen externen Steckverbinder bereitzustellen.

Bei Flurförderzeugen ist bekannt, einen fahrzeugfest angeordneten Steckverbinder auf einer Oberseite des Batteriekastens zu platzieren. Die Steckrichtung des so angeordneten Steckverbinders ist meist horizontal, so dass der externe elektrische Steckverbinder zur Herstellung der elektrisch leitenden Verbindung horizontal gedrückt wird. Gerade bei einer relativ großen Steckkraft für die elektrischen Steckverbinder, wie sie bei einer Auslegung für größere Ströme erforderlich ist, kann diese Anordnung ergonomisch nachteilig sein, insbesondere die Anordnung unterhalb der Schulterhöhe macht den Vorgang stark von der Körpergröße des Bedieners abhängig.

Aus der JP 2002 316794 A, die die Merkmalskombination des Oberbegriffs des Anspruchs 1 offenbart, ist ein Flurförderzeug mit einem elektrischen Steckverbinder bekannt, wobei die Steckverbindung relativ zur Horizontalen geneigt ist.

Der Erfindung liegt die Aufgabe zugrunde, ein Flurförderzeug bereitzustellen, das in besonders ergonomischer Art und Weise einen elektrischen Steckverbinder am Fahrzeug bereitstellt.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug besitzt ein Batteriefach oder einen Batterieraum, der bevorzugt angrenzend an einen Fahrerplatz des Fahrzeugs angeordnet ist. Die Batterie kann über einen elektrischen Leiter, bevorzugt ein oder mehrere Kabel, mit einem elektrischen Steckverbinder zur Versorgung der Batterie mit einer Versorgungsspannung verbunden werden. Batterie und elektrischer Steckverbinder sind bevorzugt elektrisch leitend miteinander verbunden. Erfindungsgemäß ist vorgesehen, dass der elektrische Steckverbinder eine Steckrichtung für einen externen Steckverbinder aufweist, die gegenüber einer Horizontalen einen Winkel von 20° bis 70° einschließt. Der Winkel gegenüber der Horizontalen erlaubt es, den externen Steckverbinder leicht von oben in eine nach unten zum Untergrund weisende Richtung einzustecken. Der Winkelbereich von 20° bis 70° der schräg von oben nach unten geführten Bewegung erweist sich als ergonomisch besonders günstig, da eine in diese Richtung geführte Bewegung ohne große körperliche Anstrengung das Überwinden einer durch die Steckverbinder vorgegebenen Steckkraft ermöglicht. Anders als bei einer rein horizontalen oder vertikalen Bewegung kann eine Bedienperson die notwendige Bewegungskraft durch eine natürliche Armbewegung ergonomisch aufbringen. Dies beruht zum Teil auf der Erkenntnis, dass Bediener mit unterschiedlicher Körpergröße intuitiv einen Abstand zu dem Steckverbinder einnehmen, der ein einfaches Stecken/Abziehen erlaubt.

In einer bevorzugten Ausgestaltung ist die schräg geneigte Steckrichtung kombiniert mit der Höhe der Anbringung des elektrischen Steckverbinders. Bevorzugt ist der elektrische Steckverbinder an dem Antriebsteil in einer Höhe von 600 mm bis 900 mm, bevorzugt in einer Höhe von 650 mm bis 810 mm angebracht. Bei herkömmlichen Flurförderzeugen ist der elektrische Steckverbinder an dem Fahrzeug häufig in einer Höhe von mehr als 1000 mm angebracht. Bei der bevorzugten

Anordnung des elektrischen Steckverbinders in einer Höhe von 600 mm bis 900 mm steht die Bedienperson bevorzugt außerhalb des Fahrzeugs auf dem Untergrund und drückt den externen Steckverbinder von oben nach unten in den fahrzeugseitig vorgesehenen elektrischen Steckverbinder.

Im Hinblick auf die Orientierung der Steckrichtung kann zwischen einer Situation unterschieden werden, in der die Steckrichtung im Wesentlichen in der X-Z-Ebene parallel zur Fahrzeuglängsrichtung verläuft und zu der Situation, in der die Steckrichtung im Wesentlichen in der Y-Z-Ebene quer zur Fahrzeuglängsrichtung erfolgt. Erfindungsgemäß erfolgt die Steckrichtung in der X-Z-Ebene parallel zur Fahrzeuglängsrichtung, da das Flurförderzeug dann näher seitlich zu einer Begrenzungswand abgestellt werden kann, ohne den Anschluss des externen Steckverbinders zu erschweren. Durch die Steckrichtung im Wesentlichen in der X-Z-Ebene parallel zur Fahrzeuglängsrichtung ist es dann immer noch möglich, ohne Umsetzen des Fahrzeugs, dieses mit der Spannungsversorgung zu verbinden. In einer bevorzugten Ausgestaltung ist der elektrische Steckverbinder von der Seite des Lastteils her zugänglich, wobei diese zweckmäßigerweise auch gut sichtbar mit einem freien Blick auf die Anschlüsse angeordnet ist.

In einer bevorzugten Weiterbildung sind eine oder mehrere seitliche Einsteckhilfen für den elektrischen Steckverbinder vorgesehen, die den externen elektrischen Steckverbinder in die gewünschte Richtung lenken. Die Einsteckhilfe ist dabei nach Art eines Leitblechs oder eines Trichters ausgebildet und führt den externen Steckverbinder in eine Position, die ein Koppeln der beiden Steckverbinder erlaubt.

In einer bevorzugten Ausgestaltung ist das Flurförderzeug mit einem Hub- oder einem Schubmast ausgestattet und der elektrische Steckverbinder ist seitlich neben dem Mast an dem Antriebsteil angebracht. Der externe Steckverbinder wird an dem Mast vorbei in dem am Fahrzeug vorgesehenen elektrischen Steckverbinder eingeführt.

Erfindungsgemäß ist der elektrische Steckverbinder an einer Seitenfläche der Batterie montiert und durch eine Durchbrechung in der Verkleidung oder durch eine Lücke zwischen Verkleidung und Batterie zugänglich. Der elektrische Steckverbinder kann hierbei durch die Lücke oder die Verkleidung im Bereich des Batteriefachs nach außen vorstehen oder bündig mit dieser abschließen. Auch ist es möglich, den elektrischen Steckverbinder an der Verkleidung des Antriebsteils zu befestigen. Ebenso kann ein Schutzgehäuse für den elektrischen Steckverbinder vorgesehen sein, das einen zusätzlichen Schutz für die Kontakte bietet.

In einer bevorzugten Ausgestaltung ist der elektrische Steckverbinder um eine horizontale Achse schwenkbar angeordnet, um je nach Bewegungsrichtung des Armes der Bedienperson den Winkel des Steckverbinders zur Horizontalen anzupassen. Die Schwenkbarkeit um die horizontale Achse kann insbesondere in dem genannten Winkelbereich von 20° bis 70° bestehen. Der elektrische Steckverbinder kann frei schwenkbar sein, so dass er sich beim Einführen des externen Steckverbinders automatisch in der Steckrichtung ausrichtet. Alternativ kann eine Feststellmöglichkeit vorgesehen sein, so dass der Steckverbinder in der gewünschten Winkelstellung fixiert werden kann.

In einer bevorzugten Ausgestaltung ist der elektrische Steckverbinder derart angeordnet, dass der externe Steckverbinder von einer stehenden Bedienperson in einer durchgehenden Bewegung eingeführt werden kann. Auch kann vorgesehen sein, dass die Steckverbinder beispielsweise durch eine Schnappverbindung oder dergleichen miteinander gekoppelt werden und die Verbindung gesichert wird.

Eine bevorzugte Ausgestaltung des erfindungsgemäßen Flurförderzeugs wird nachfolgend an einem Beispiel näher erläutert. Es zeigen:
- Fig. 1: einen Schubmaststapler in einer schematischen Ansicht von der Seite,
- Fig. 2: eine Detailansicht eines Schubmaststaplers mit einem elektrischen Steckverbinder in der Ansicht von schräg hinten,
- Fig. 3: eine Batterie für das Flurförderzeug mit einem angebrachten elektrischen Steckverbinder,
- Fig. 4: das Antriebsteil ohne Lastteil in einer Ansicht von schräg hinten, und
- Fig. 5: eine Bedienperson mit der externen Steckverbindung.

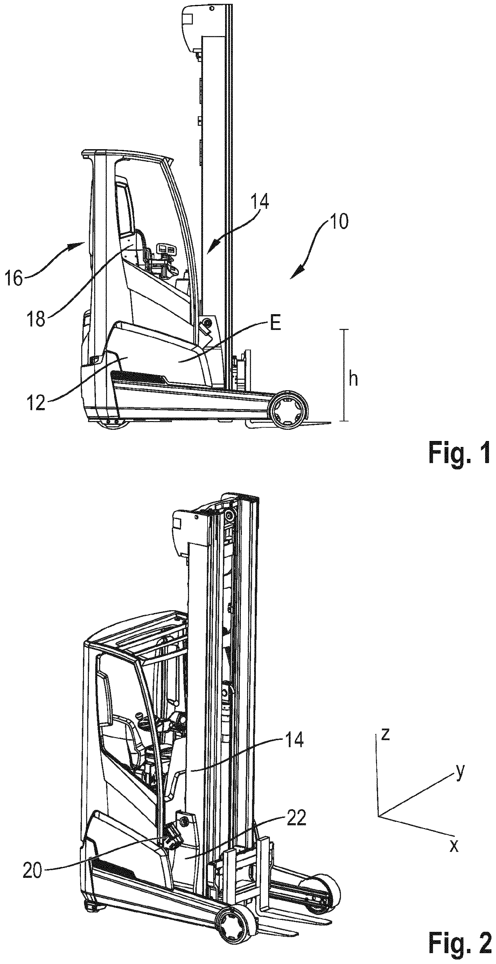

Fig. 1 zeigt ein Flurförderzeug 10, das ein Antriebsteil 12 und einen Schubmast 14 besitzt. Das Antriebsteil 12 besitzt einen überdachten Fahrerplatz 16 mit einem Sitz 18. In das Antriebsteil 12 integriert ist eine Antriebsbatterie (nicht sichtbar), die die elektrischen Verbraucher speist.

Fig. 2 zeigt in einer Ansicht von schräg hinten einen elektrischen Steckverbinder 20, der in dem Antriebsteil 12 sichtbar ist. Der elektrische Steckverbinder 20 befindet sich seitlich neben einem Masthalter 22, der den Schubmast 14 hält. Der elektrische Steckverbinder 20 ist an der Batterie (nicht dargestellt) angebracht.

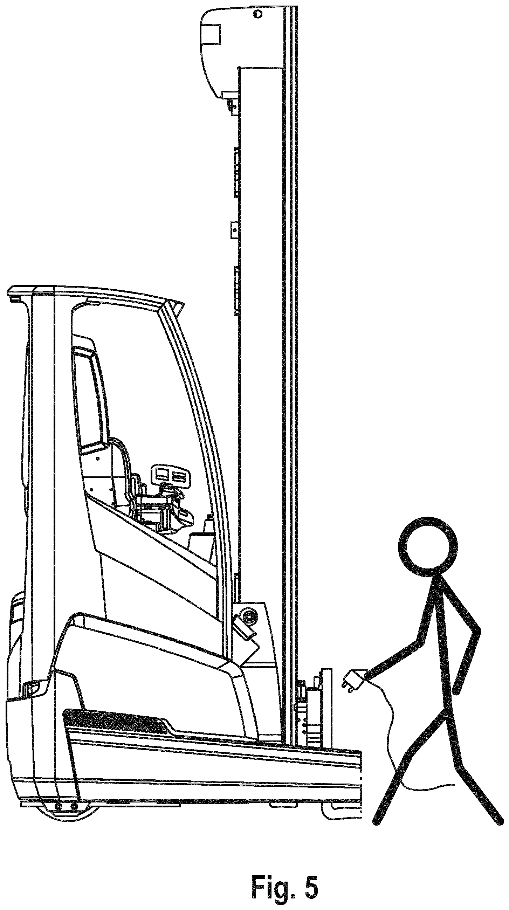

Der elektrische Steckverbinder 20 ist in dem Antriebsteil 12 derart angeordnet, dass eine neben dem Flurförderzeug stehende Bedienperson, die ihr Gesicht zum Fahrzeug gewandt hat, mit der rechten Hand einen externen Steckverbinder einführen kann. Diese Situation ist zusätzlich in Fig. 5 veranschaulicht. Die Einsteckrichtung für den elektrischen Steckverbinder ist in Fig. 1 als Linie E dargestellt. Die Linie E besitzt dabei eine Neigung von 45° gegenüber der Horizontalen und naturgemäß auch gegenüber der Vertikalen. Die Höhe h des elektrischen Steckverbinders über dem Grund beträgt 730 mm. Höhe und Einsteckrichtung haben sich für Bedienpersonen mit einer Körpergröße von 1,75 m bis 2,00 m als besonders ergonomisch herausgestellt.

Ebenfalls in Fig. 2 eingezeichnet ist das in dieser Anmeldung verwendete Koordinatensystem, dessen X-Achse in Fahrzeugslängsrichtung, dessen Y-Achse in Fahrzeugquerrichtung und dessen Z-Achse vertikal ausgerichtet ist.

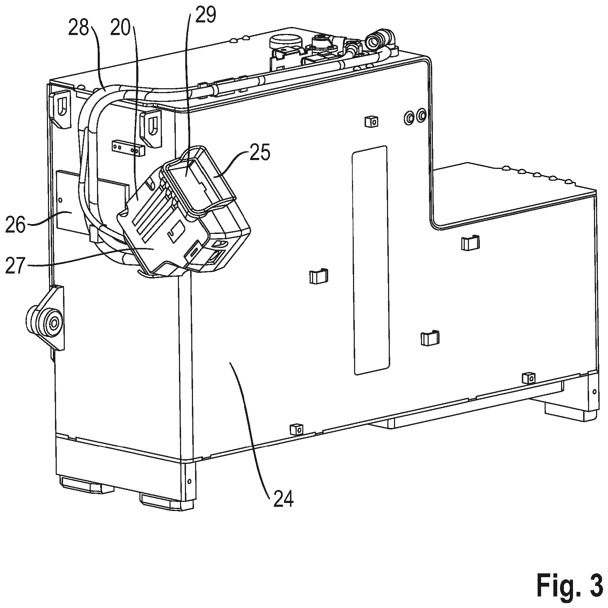

Fig. 3 zeigt die Anbringung des elektrischen Steckverbinders 20 an einem Batteriekörper 24. An dem Batteriekörper 24 ist eine Halteplatte 26 montiert. Der elektrische Steckverbinder besitzt eine Orientierung, die um 45° gegenüber der Horizontalen geneigt ist. Der elektrische Steckverbinder 20 kann über die Kabel 28 mit der Batterie 24 elektrisch leitend verbunden werden. Der elektrische Steckverbinder 20 besitzt eine Einsteckhilfe 25. Die Einsteckhilfe 25 begrenzt das seitliche Einführen eines externen elektrischen Steckverbinders. Die mit der Einführhilfe 25 ausgestattete Batterie wird in einem Batteriefach (nicht dargestellt) des Antriebsteils angeordnet und ist durch eine Durchbrechung in der Verkleidung bzw. durch eine Lücke zwischen Verkleidung und Batterie von außen zugänglich. Der elektrische Steckverbinder ist in einem Gehäuse 27 geschützt gehalten. Das Gehäuse 27 besitzt einen Deckel 29, der den Zugang zu dem elektrischen Steckverbinder sperrt und durch Einführen des externen Steckers beiseite gedrückt wird.

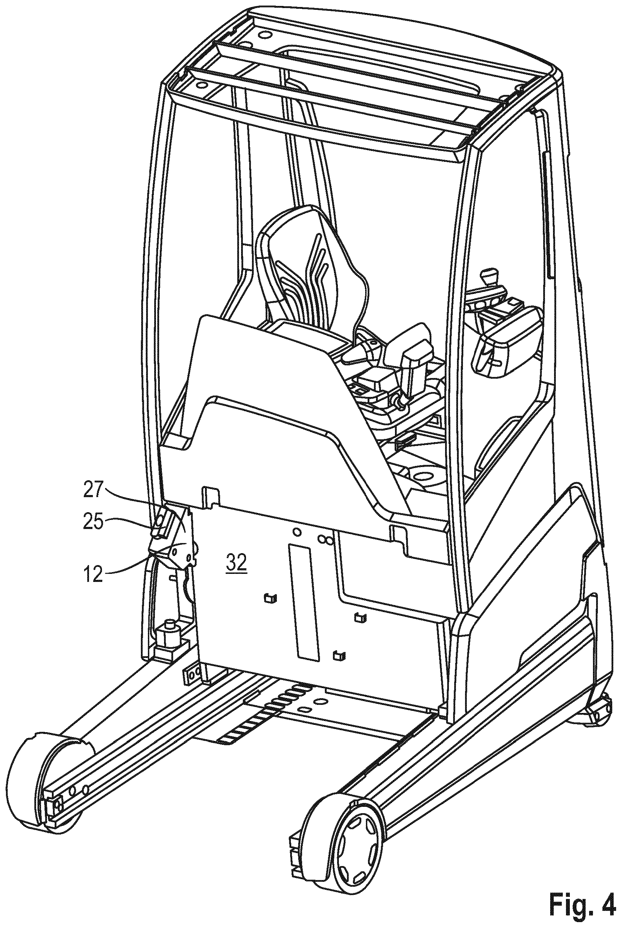

Fig. 4 zeigt das Antriebsteil eines Schubmaststaplers mit einem seitlich angeordneten elektrischen Steckverbinder 20, dessen Einsteckrichtung sich in Fahrzeuglängsrichtung erstreckt. Deutlich zu erkennen ist das Gehäuse 27 mit seiner Einsteckhilfe 25, die beide über eine Rückwand 32 des Antriebsteils vorstehen. Der elektrische Steckverbinder 20 selbst ist in seiner geneigten Position durch den Deckel 29 abgedeckt. Das Gehäuse 27 schützt den elektrischen Steckverbinder 20 und seine Kontakte vor Umwelteinflüssen.

### Bezugszeichenliste:

- 10: Flurförderzeug
- 12: Antrieb steil
- 14: Lastteil
- 14': Hub- oder Schubmast
- 16: Fahrstand
- 18: Sitzplatz
- 20: elektrischer Steckverbinder
- 22: Masthalter
- 24: Batteriekörper
- 25: Einsteckhilfe
- 26: Halteplatte
- 27: Gehäuse
- 28: elektrischer Leiter
- 29: Deckel
- 32: Rückwand
- E: Steckrichtung

## Patentansprüche

1. Flurförderzeug (10) mit einer Batterie, die in einem Batteriefach des Antriebsteils (12) angeordnet und über einen elektrischen Leiter (28) mit einem elektrischen Steckverbinder (20) zur Spannungsversorgung der Batterie bei einem Ladevorgang elektrisch leitend verbindbar ist, wobei der elektrische Steckverbinder (20) für einen externen Steckverbinder eine Steckrichtung (E) aufweist, die gegenüber einer Horizontalen einen Winkel von 20° bis 70° aufweist, **dadurch gekennzeichnet, dass** die Steckrichtung (E) des elektrischen Steckverbinders (20) in einer Ebene parallel zu einer Fahrzeuglängsrichtung verläuft und der elektrische Steckverbinder (20) an einer Seitenfläche der Batterie montiert und durch eine Durchbrechung in der Verkleidung oder eine Lücke zwischen Verkleidung und Batterie zugänglich ist.

2. Flurförderzeug nach Anspruch 1, **dadurch gekennzeichnet, dass** der elektrische Steckverbinder (20) an dem Antriebsteil oder dem Batteriegehäuse (12) in einer Höhe von 600 mm bis 900 mm, bevorzugt von 650 mm bis 810 mm angebracht ist.

3. Flurförderzeug nach Anspruch 1 oder 2, **dadurch gekennzeichnet, dass** mindestens eine seitliche Einsteckhilfe (25) für den elektrischen Steckverbinder (20) vorgesehen ist, die für den externen elektrischen Steckverbinder dient.

4. Flurförderzeug nach einem der Ansprüche 1 bis 3, **dadurch gekennzeichnet, dass** ein Hub- oder ein Schubmast (14') vorgesehen ist und der elektrische Steckverbinder (20) seitlich neben dem Mast an dem Antriebsteil (12) angebracht ist.

5. Flurförderzeug nach einem der Ansprüche 1 bis 4, **dadurch gekennzeichnet, dass** der elektrische Steckverbinder (20) um eine horizontale Achse beweglich angeordnet ist.

6. Flurförderzeug nach einem der Ansprüche 1 bis 5, **dadurch gekennzeichnet, dass** der elektrische Steckverbinder (20) derart angeordnet ist, dass der externe Steckverbinder von einer stehenden Bedienperson in einer durchgehenden Bewegung eingeführt werden kann.

## Claims

1. An industrial truck (10) comprising a battery, which is arranged in a battery compartment of a drive part (12) and which can be connected in an electrically conductive manner to an electrical connector (20) via an electrical conductor (28) in order to supply power to the battery during a charging procedure, wherein the electrical connector (20) has a plug-in direction (E) for an external connector, which plug-in direction is at an angle of 20° to 70° with respect to the horizontal, **characterized in that** the plug-in direction (E) of the electrical connector (20) extends in a plane parallel to a vehicle longitudinal direction and the electrical connector (20) is installed on a lateral surface of the battery and is accessible through an opening in the cladding or a gap between the cladding and the battery.

2. The industrial truck according to claim 1, **characterized in that** the electrical connector (20) is mounted on the drive part or on the battery housing (12) at a height of 600 mm to 900 mm, preferably 650 mm to 810 mm.

3. The industrial truck according to claim 1 or 2, **characterized in that** at least one lateral plug-in aid (25) for the electrical connector (20) is provided and is used for the external electrical connector.

4. The industrial truck according to any one of claims 1 to 3, **characterized in that** a lift mast or retractable mast (14') is provided and the electrical connector (20) is mounted on the drive part (12) to the side next to the mast.

5. The industrial truck according to any one of claims 1 to 4, **characterized in that** the electrical connector (20) is arranged so as to be movable about a horizontal axis.

6. The industrial truck according to any one of claims 1 to 5, **characterized in that** the electrical connector (20) is arranged such that the external connector can be inserted in a continuous movement by a standing operator.

## Revendications

1. Chariot de manutention (10) doté d'une batterie disposée dans un compartiment à batterie de la partie d'entraînement (12) et apte à être reliée de façon électriquement conductrice à un connecteur enfichable électrique (20) par le biais d'un conducteur électrique (28) pour l'alimentation de la batterie pendant un processus de chargement, dans lequel le connecteur enfichable électrique (20) présente une direction d'enfichage (E) pour un connecteur enfichable externe, laquelle présente un angle de 20° à 70° par rapport à une horizontale, **caractérisé en ce que** le direction d'enfichage (E) du connecteur enfichable électrique (20) s'étend dans un plan parallèle à une direction longitudinale de véhicule et le connecteur enfichable électrique (20) est monté sur une surface latérale de la batterie et accessible par une ouverture dans le revêtement ou un interstice entre le revêtement et la batterie.

2. Chariot de manutention selon la revendication 1, **caractérisé en ce que** le connecteur enfichable électrique (20) est fixé à la partie d'entraînement ou au boîtier de batterie (12) à une hauteur de 600 mm à 900 mm, de préférence de 650 mm à 810 mm.

3. Chariot de manutention selon la revendication 1 ou 2, **caractérisé en ce qu'**il est prévu au moins un accessoire d'enfichage latéral (25) pour le connecteur enfichable électrique (20), lequel sert pour le connecteur enfichable électrique externe.

4. Chariot de manutention selon l'une des revendications 1 à 3, **caractérisé en ce qu'**il est prévu un mât de levage ou de poussée (14') et le connecteur enfichable électrique (20) est fixé latéralement à côté du mât à la partie d'entraînement (12).

5. Chariot de manutention selon l'une des revendications 1 à 4, **caractérisé en ce que** le connecteur enfichable électrique (20) est disposé de façon mobile autour d'un axe horizontal.

6. Chariot de manutention selon l'une des revendications 1 à 5, **caractérisé en ce que** le connecteur enfichable électrique (20) est disposé de telle façon que le connecteur enfichable externe peut être introduit dans un mouvement continu par un opérateur se tenant debout.
